# EUROPEAN PATENT SPECIFICATION

(11) **EP 3 267 524 B1**
(45) Date of publication and mention of the grant of the patent: **06.05.2020**
(21) Application number: 16759172.6
(22) Date of filing: 03.03.2016
(51) Int. Cl.: H01M 8/04014, H01M 8/0612, H01M 8/0662, H01M 8/0668

(54) **FUEL CELL SYSTEM**
BRENNSTOFFZELLENSYSTEM
SYSTÈME DE PILE À COMBUSTIBLE

(30) Priority: 03.03.2015 KR 20150029814
(43) Date of publication of application: 10.01.2018
(73) Proprietor: Doosan Corporation, Seoul 04563 (KR)
(72) Inventor: KIM, Ho-Suk, Yongin-si Gyeonggi-do 17079 (KR); KIM, Du-Hee, Seongnam-si Gyeonggi-do 13585 (KR); HONG, Byung-Sun, Seongnam-si Gyeonggi-do 13517 (KR); SHINN, Mee-Nam, Yongin-si Gyeonggi-do 17163 (KR)
(74) Representative: Krauns, Christian
(86) International application number: PCT/KR2016/002150
(87) International publication number: WO 2016/140536

(56) References cited:
- EP-A1- 2 830 136
- JP-A- 2007 254 572
- JP-A- 2012 149 002
- KR-A- 20110 051 054
- KR-A- 20140 034 623
- KR-B1- 101 187 004
- KR-B1- 101 327 338
- US-A1- 2004 023 086
- WENDT H: "Gereinigt un verstaerkt. Biogase fuer stationaere Brennstoffzellen und zur Netzeinspeisung", BWK BRENNSTOFF WARME KRAFT, SPRINGER VDI VERLAG, DUSSELDORF, DE, vol. 60, no. 12, December 2008 (2008-12), pages 60-66, XP001517193, ISSN: 1618-193X

## Description

### [Technical Field]

The present invention relates to a fuel cell system. More particularly, the present invention relates to an environmentally-friendly fuel cell system in which emission of carbon dioxide as a greenhouse gas is minimized.

### [Background Art]

A fuel cell system includes a reformer for converting a fuel gas containing hydrocarbons into a reformed gas rich in hydrogen, and a fuel cell stack for producing electricity by reacting the reformed gas with oxygen in the air.

Recently, research and development on extracting high-purity methane gas from a biogas and using it as a fuel gas for a fuel cell have advanced.

The biogas is input to a reformer after a purification process of removing moisture and impurities, and an upgrading process of separating methane and carbon dioxide to increase purity of the methane.

In the upgrading process of the biogas, there are a chemical absorption method, a pressure swing absorption method, a water washing method, and a membrane separation method.

Among them, the membrane separation method has a relatively simple apparatus configuration, is environmentally friendly, and the apparatus is easy to operate, however in order to increase the purity of the methane, it is necessary for it to be operated with a high pressure applied to the separation membrane, so energy efficiency is low due to high energy consumption due to the pressurization. Also, since the carbon dioxide separated in the upgrading process of the biogas is a representative greenhouse gas, an emission amount thereof must be reduced. The US 2004/0023086 A1 discloses a fuel cell power generation method comprising a methane fermentation step for subjecting organic matter to methane fermentation, a pretreatment step for pretreating digestion gas yielded in the methane a fermentation step, a hydrogen production step for producing hydrogen-containing gas from the gas which has been pretreated in the pretreatment step, and a fuel cell power generation step for supplying the hydrogen-containing gas produced in the hydrogen production step to a fuel cell to generate electricity. The pretreatment step comprises an alkaline absorption step for absorbing carbon dioxide or carbon dioxide and hydrogen sulfide contained in the digestion gas yielded in the methane fermentation step into an alkaline absorbent solution. The EP2 830 136 A1 discloses a fuel cell using biogas as a fuel, in which the fuel cell is supplied with a first gas required at a fuel electrode and a second gas required at an air electrode, which are separated from the biogas by a selective permeation method using a separation membrane of a gas-purification separation unit, and it supplies the gas discharged from the fuel cell along with the biogas to the gas-purification separation unit. The JP 2007/254572 A discloses a methane concentration system. The system is the one in which a plurality of stages of carbon dioxide-permeable membranes are combined and carbon dioxide is separated from the mixed gas containing carbon dioxide and methane to concentrate the methane. The non-permeant gas in the permeable membrane of the former stage is introduced to the inlet of the permeable membrane of the latter stage, and the carbon dioxide is separated to obtain the high concentration methane.

### [DISCLOSURE]

### [Technical Problem]

The present invention provides a fuel cell system in which energy efficiency of the entire fuel cell system is increased by reducing an amount of energy consumed in the upgrading process of the fuel gas, and realizing an environmentally-friendly fuel cell by minimizing emission of the carbon dioxide as a greenhouse gas.

### [Technical Solution]

The problem of the present invention is solved by a fuel cell system according to the independent claim 1. The dependent claims refer to further advantageous developments of the present invention. A fuel cell system according to an exemplary embodiment of the present invention includes: a pretreatment device removing an impurity included in a fuel gas and increasing purity of methane; a reformer converting the fuel gas emitted from the pretreatment device into a reformed gas; and a fuel cell stack generating electricity by using the reformed gas. The pretreatment device includes an upgrading unit separating a byproduct gas including carbon dioxide from the fuel gas, and a carbon dioxide removing unit removing carbon dioxide included in the byproduct gas.

The pretreatment device may further include a purification unit installed in front of the upgrading unit, and the purification unit may include at least one among a dehumidification unit, a desulfurization unit, an ammonia removal unit, and a siloxane removal unit.

The upgrading unit includes a compressor absorbing and compressing the fuel gas with the impurity removed, and a multistage separation membrane separating methane and carbon dioxide from the compressed fuel gas. The fuel gas emitted from the upgrading unit may include methane at 90 % or more. The multistage separation membrane includes at least two separation membranes disposed in series, and a pressure of the fuel gas applied to an inflow portion of the multistage separation membrane may be 0.3 MPa to 0.5 MPa.

The carbon dioxide removing unit may include a configuration passing the byproduct gas through a mixture of water and calcium carbonate, and carbon dioxide included in the byproduct gas may be carbonated in the carbon dioxide removing unit. The carbon dioxide removing unit may generate high purity methane, and may provide the high purity methane to a fuel supplying unit installed between the upgrading unit and the reformer.

The reformer may receive heat required for the reforming reaction from a burner. The fuel cell system may further include an auxiliary carbon dioxide removing unit connected to the burner and removing carbon dioxide among a combustion gas emitted from the burner. The reformed gas emitted from the reformer may include carbon dioxide, and the fuel cell stack may provide a non-reacted fuel including carbon dioxide to the burner.
The auxiliary carbon dioxide removing unit may be connected to an air outlet of the fuel cell stack to remove carbon dioxide among non-reacted air emitted from the fuel cell stack.

### [Advantageous Effects]

The fuel cell system removes carbon dioxide generated in the pretreatment process of the fuel gas such that the environmentally-friendly fuel cell system with little emission of the greenhouse gas may be realized. Also, the energy efficiency of the entire fuel cell system may increase as an operation pressure of the upgrading unit increasing the methane purity of the fuel gas is lowered.

### [Description of the Drawings]

FIG. 1 is a schematic diagram of a fuel cell system according to a first exemplary embodiment of the present invention.
FIG. 2 is a schematic diagram of an upgrading unit among a fuel cell system shown in FIG. 1.
FIG. 3 is a schematic diagram of a carbon dioxide removing unit among a fuel cell system shown in FIG. 1.
FIG. 4 is a schematic diagram of a fuel cell system according to a second exemplary embodiment of the present invention.

**- Description of Symbols -**

| | |
|---|---|
| 100: pretreatment device | 110: purification unit |
| 120: upgrading unit | 130: carbon dioxide removing unit |
| 200: reformer | 210: burner |
| 300: fuel cell stack | 310: inverter |
| 320: heat storage tank | 410: fuel supplying unit |
| 420: water supplying unit | 430: air supplying unit |
| 440: control unit | 500: auxiliary carbon dioxide removing unit |

### [Mode for Invention]

The present invention will be described more fully hereinafter with reference to the accompanying drawings, in which exemplary embodiments of the invention are shown. As those skilled in the art would realize, the described embodiments may be modified in various different ways, all without departing from the scope of the present invention, as defined in the claims.

Throughout the specification, unless explicitly described to the contrary, the word "comprise" and variations such as "comprises" or "comprising" will be understood to imply the possible further inclusion of other elements. In the drawings, the sizes and thicknesses of respective elements are arbitrarily illustrated for ease of description, and the present invention is not necessarily limited to such illustrated sizes and thicknesses.

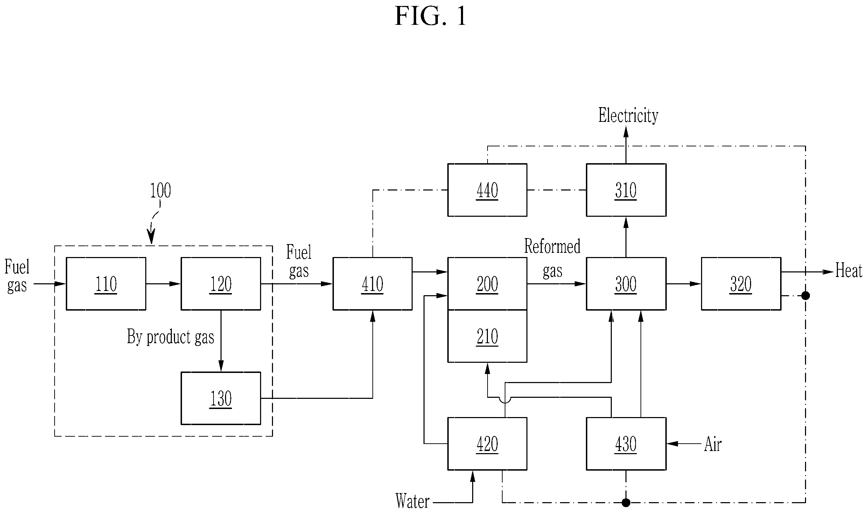

FIG. 1 is a schematic diagram of a fuel cell system according to a first exemplary embodiment of the present invention.

Referring to FIG. 1, the fuel cell system of the first exemplary embodiment includes a pretreatment device 100 removing an impurity included in a fuel gas and increasing purity of methane, a reformer 200 converting the fuel gas into a reformed gas, and a fuel cell stack 300 reacting the reformed gas with oxygen in air to generate electricity.

The fuel gas as a gas including hydrocarbon may be the biogas, for example. The biogas is a gas generated when anaerobically decomposing organic waste with a high content of organic material such as livestock manure and urine, food waste, and sewage treatment plant sludge. The biogas may contain about 55 to 80 % methane (CH4), 20 to 45 % carbon dioxide (CO2), and other impurities such as hydrogen sulfides, siloxanes, ammonia, etc.

The pretreatment device 100 includes a purification unit 110 removing the impurities included in the fuel gas, an upgrading unit 120 increasing the purity of methane by separating carbon dioxide from the fuel gas with the impurity removed, and a carbon dioxide removing unit 130 removing carbon dioxide separated from the upgrading unit 120.

The purification unit 110 may include a dehumidification unit removing moisture included in the fuel gas, a desulfurization unit removing hydrogen sulfide included in the fuel gas, an ammonia removal unit removing ammonia included in the fuel gas, and a siloxane removal unit removing siloxane included in the fuel gas.

The dehumidification unit may be disposed ahead of the purification unit 110, and a dew point temperature of the fuel gas passing through the dehumidification unit may be less than 0 °C. In this case, units disposed after the dehumidification unit may prevent a coagulation phenomenon of an adsorbent die to the moisture and a performance deterioration due thereto. While the biogas sequentially passes through the above-described units, the moisture and various foreign materials are removed.

The fuel gas from which the moisture and the impurity are removed through the purification unit 110 as a medium quality gas may be used as a fuel of a cogeneration power plant, however it is incompatible as a fuel for a fuel cell due to low energy efficiency. Accordingly, the upgrading unit 120 separates carbon dioxide from the fuel gas from which the impurity is removed to increase methane purity of the fuel gas to 90 % or more. A detailed configuration of the upgrading unit 120 and the carbon dioxide removing unit 130 are described later.

A fuel supplying unit 410 is installed between the pretreatment device 100 and the reformer 200. The fuel supplying unit 410 includes a fuel gas pressure pump and a fuel flow meter, and supplies the fuel gas emitted from the pretreatment device 100 to the reformer 200.

The reformer 200 is a water vapor reforming reactor, and reacts methane in the fuel gas with oxygen in a high temperature atmosphere to be reformed into hydrogen. The reformer 200 receives heat from a burner 210. The burner 210 mixes and combusts a burner fuel and air to generate combustion heat and supplies the combustion heat to the reformer 200, thereby maintaining the reformer 200 at a high temperature required for vapor reformation.

Carbon monoxide (CO) as a byproduct is generated in the reformed reaction process. A water gas reactor (not shown) and a partial oxidation reactor (not shown) are installed downstream of the reformer (200) to lower a concentration of carbon monoxide included in the reformed gas to less than about 50 ppm.

The fuel cell stack 300 chemically react hydrogen among the reformed gas with oxygen among the air to generate the electricity and the heat. The fuel cell is a high efficient energy source that can be used permanently as long as hydrogen is continuously supplied, without emission of pollutants or noise. The fuel cell stack 300 is connected to an inverter 310. The inverter 310 converts DC power of the fuel cell stack 300 into AC power.

The fuel cell stack 300 may be connected to a heat storage tank 320. The heat storage tank 320 receives and stores the heat generated from the fuel cell stack 300 by using waste heat recovering equipment (not shown). The fuel cell system may supply hot water or heating water to users by using the heat of the heat storage tank 320 as well as to generate the electricity.

The fuel cell system further includes a water supplying unit 420 and an air supplying unit 430, as well as a control unit 440. The water supplying unit 420 includes a water pump and a heat exchanger, and it supplies a fixed quantity of water required for the water vapor reformed reaction to the reformer 200, and supplies cooling water to the fuel cell stack 300. The air supplying unit 430 includes an air flow meter and an air pump, and supplies the air to the burner 210 and the fuel cell stack 300. The control unit 440 is electrically connected to the fuel supplying unit 410, the water supplying unit 420, the air supplying unit 430, and the inverter 310 to control operations thereof.

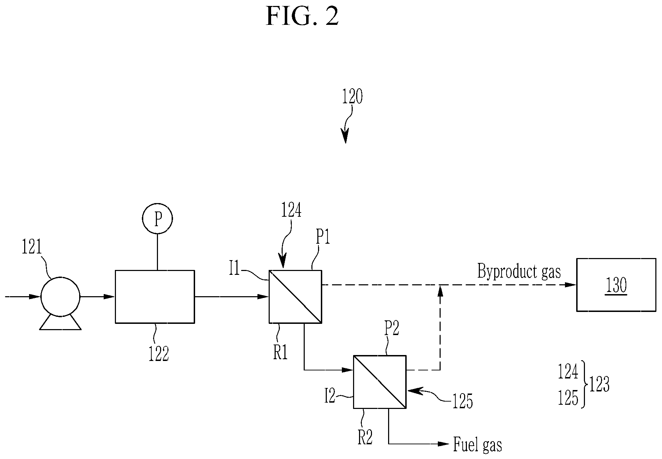

FIG. 2 is a schematic diagram of an upgrading unit among a fuel cell system shown in FIG. 1.

Referring to FIG. 2, the upgrading unit 120 has a separation membrane for gas separation (hereinafter, for convenience, referred to as "a separation membrane") having high transmittance for carbon dioxide. The separation membrane may be composed of a hollow fiber membrane, and may include any one of polyether sulfone, polystyrene, and polyimide.

If fuel gas of a predetermined pressure and a predetermined flow rate is supplied to the separation membrane, most of carbon dioxide passes through the separation membrane and most of methane is blocked by the separation membrane. The separation membrane is divided into an inflow portion, a permeation portion, and a residual portion. The inflow portion is a portion where the fuel gas is injected, the permeation portion passes carbon dioxide, and the residual portion redirects methane.

The upgrading unit 120 includes a compressor 121 absorbing and compressing the fuel gas emitted from the purification unit 110, a buffer tank 122 lowering the pressure of the fuel gas emitted from the compressor 121, and a multistage separation membrane 123 separating methane and carbon dioxide from the fuel gas. The buffer tank 122 may be omitted as necessary. The multistage separation membrane 123 includes at least a first separation membrane 124 and a second separation membrane 125 disposed in series.

The fuel gas absorption-compressed by the compressor 121 is provided to the inflow portion I1 of the first separation membrane 124, and the first separation membrane 124 separates carbon dioxide from the fuel gas. In this process, carbon dioxide of a small amount is contained in the residual portion R1 of the first separation membrane 124, and methane of a small amount is contained in the permeation portion P1 of the first separation membrane 124.

The residual portion R1 of the first separation membrane 124 is connected to the inflow portion I2 of the second separation membrane 125 to supply the fuel gas to the second separation membrane 125. The second separation membrane 125 again separates carbon dioxide from the supplied fuel gas. In this process, carbon dioxide of a small amount is contained in the residual portion R2 of the second separation membrane 125, and methane of a small amount is contained in the permeation portion P2 of the second separation membrane 125.

A conventional art using an upgrading unit using the membrane separation method applies a high pressure of about 0.6 MPa to 1 MPa to the multistage separation membrane to maintain methane purity in the fuel gas of more than 98 %. Generally, as an inflow portion pressure of the multistage separation membrane increases, separation performance of methane and carbon dioxide increases, however energy consumption according to the compression increases such that the energy efficiency of the entire fuel cell system is lowered.

In the fuel cell system of the first exemplary embodiment, the upgrading unit 120 lowers the inflow portion pressure of the multistage separation membrane 123, such that the energy efficiency of the entire fuel cell system increases.

In this case, the methane purity in the fuel gas finally emitted from the upgrading unit 120 with a degree to prevent a choking phenomenon of the reformer 200 catalyst, for example, may be set as 90 %. That is, the upgrading unit 120 lowers the inflow portion pressure of the multistage separation membrane 123 to make the fuel gas finally emitted from the upgrading unit 120 include methane at more than 90 %.

The methane purity of the fuel gas finally from the upgrading unit 120 has some difference depending on the flow rate of the fuel gas, but is proportional to the pressure applied to an entrance of the multistage separation membrane 123. When setting the inflow pressure of the fuel gas applied to the multistage separation membrane 123 in a condition of about 0.3 MPa to 0.5 MPa, it is possible to secure methane purity of 90 % or more within the final emitted fuel gas.

Table 1 shows a detected amount of carbon dioxide depending on an inflow portion pressure of the fuel gas and an outlet flow rate of the fuel gas. The composition of the fuel gas through the purification process is methane at 50 % and carbon dioxide at 50 %, and the concentration of carbon dioxide within the finally emitted fuel gas is measured while changing the outlet flow rate of the inflow portion pressure.

**(Table 1)**

| Carbon dioxide detected amount (%) | | Inflow portion pressure (MPa) | | | | |
|---|---|---|---|---|---|---|
| | | 0.1 | 0.2 | 0.3 | 0.4 | 0.5 |
| Fuel gas outlet flow rate (L/min) | 2 | 26.4 | 11.4 | 5.7 | 4.3 | 3.1 |
| | 3 | 32.5 | 17.7 | 9.9 | 6.8 | 3.8 |
| | 4 | 33.9 | 21.2 | 13.3 | 8.9 | 5.4 |
| | 5 | 38.2 | 23.9 | 15.3 | 11.7 | 7.3 |

As shown in Table 1, when the outlet flow rate of the fuel gas is 2-3 L/min and the inflow portion pressure of the fuel gas is more than 0.3 MPa, it may be confirmed that the methane concentration within the finally emitted fuel gas is over 90 %. As the outlet flow rate of the fuel gas increases, the inflow portion pressure of the fuel gas satisfying the methane purity condition of 90 % is high, but does not exceed 0.5 MPa.

The residual portion R2 of the second separation membrane 125 is connected to the reformer 200 to supply the fuel gas to the reformer 200. The permeation portion P2 of the first separation membrane 124 and the permeation portion P2 of the second separation membrane 125 are connected to the carbon dioxide removing unit 130 to supply the byproduct gas to the carbon dioxide removing unit 130. The byproduct gas includes about 70 % to 80 % of carbon dioxide and 20 % to 30 % of unused methane.

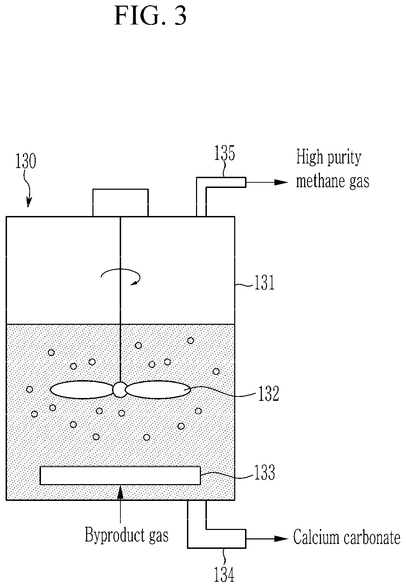

FIG. 3 is a schematic diagram of a carbon dioxide removing unit among a fuel cell system shown in FIG. 1.

Referring to FIG. 3, the carbon dioxide elimination unit 130 is made as a configuration passing the byproduct gas through a mixture of water and calcium oxide (CaO). For example, the carbon dioxide removing unit 130 may include a chamber 131, a stirrer 132 installed in the chamber 131 and agitating water and calcium oxide, and a nozzle 133 emitting the byproduct gas inside the chamber 131.

The nozzle 133 is positioned at a lower side inside the chamber 131, and may emit the byproduct gas in a bubble form inside the mixture of water and calcium oxide. Carbon dioxide included in the byproduct gas becomes calcium carbonate by the following Chemical Formula 1.
[Chemical Formula 1]

CaO + H₂O → Ca(OH)₂

Ca(OH)₂ + CO₂ → CaCO₃ + H₂O

Since calcium carbonate is used as a variety of additives in a papermaking field, a food field, a chemical field, etc., the carbon dioxide removing unit 130 may create added value in addition to the main function of removing carbon dioxide that is a greenhouse gas. The calcium carbonate may be emitted outside the chamber 131 through an emission pipe 134 under the chamber 31.

As the carbon dioxide included in the byproduct gas is removed, high purity methane of 97 % or more remains. The carbon dioxide removing unit 130 is connected to a storage tank (not shown) storing methane, or is connected to the fuel supplying unit 410 through a pipe 135, thereby adding the high purity methane to the fuel gas emitted from the upgrading unit 120.

In the latter case, as the pretreatment device 100 removes carbon dioxide as the greenhouse gas generated in a pretreatment process of the fuel gas, the environmentally-friendly fuel cell system is realized and simultaneously the high purity methane remaining after removing carbon dioxide is reused as the fuel gas of the reformer 200, thereby increasing the efficiency of the entire fuel cell system.

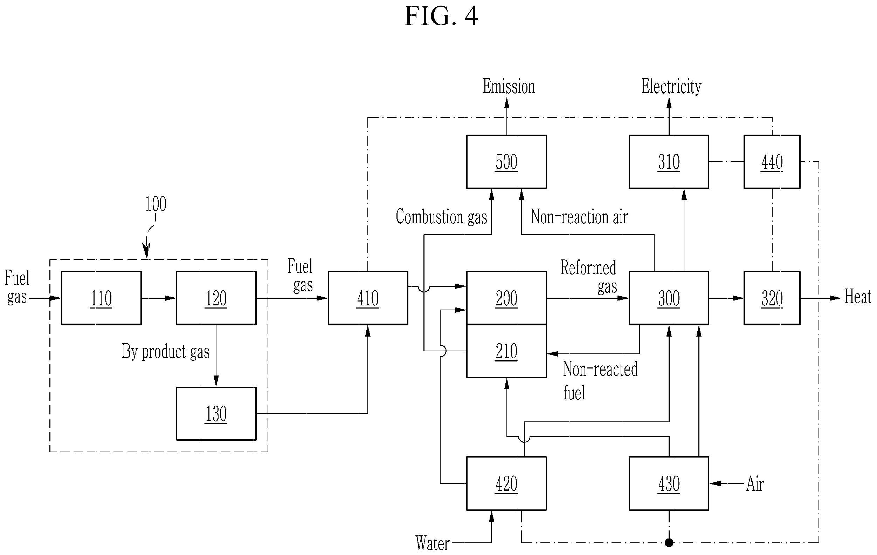

FIG. 4 is a schematic diagram of a fuel cell system according to a second exemplary embodiment of the present invention.

Referring to FIG. 4, the fuel cell system according to the second exemplary embodiment has the same configuration as the above-described first exemplary embodiment, except for further including an auxiliary carbon dioxide removing unit 500. The same reference numerals are used for the same constituent elements as in the first exemplary embodiment.

The auxiliary carbon dioxide removing unit 500 may be connected to the burner 210 of the reformer 200 and the air outlet of the fuel cell stack 300. The auxiliary carbon dioxide removing unit 500 removes carbon dioxide among the combust gas emitted from the burner 210 and carbon dioxide among the non-reacted air emitted from the fuel cell stack 300. The configuration of the auxiliary carbon dioxide removing unit 500 may be the same as that of the carbon dioxide removing unit 130 of FIG. 3.

Methane inside the reformer 200 is separated into hydrogen and carbon dioxide by the water vapor reformation reaction, and the reformed gas including carbon dioxide is supplied to the fuel cell stack 300. The fuel cell stack 300 emits the non-reacted fuel including carbon dioxide, and in this case, the fuel outlet of the fuel cell stack 300 is connected to the burner 210 to supply the non-reacted fuel to the burner 210. The non-reacted fuel provided to the burner 210 is used to maintain the temperature of the reformer 200. Accordingly, carbon dioxide generated from the reformer 200 is also included in the combustion gas supplied from the burner 210 to the auxiliary carbon dioxide removing unit 500.

The fuel cell system of the second exemplary embodiment again removes carbon dioxide among the air emitted from the reformer 200, the burner 210, and the fuel cell stack 300, as well as carbon dioxide generated in the pretreatment process of the fuel gas. Therefore, it is possible to realize the environmentally friendly fuel cell system with little emission of the greenhouse gas.

While this invention has been described in connection with what is presently considered to be practical exemplary embodiments, it is to be understood that the invention is not limited to the disclosed embodiments, but, on the contrary, is intended to cover various modifications included within the scope of the appended claims.

## Claims

1. A fuel cell system comprising:
a pretreatment device (100) removing an impurity included in a fuel gas and increasing purity of methane;
a reformer (200) converting the fuel gas emitted from the pretreatment device (100) into a reformed gas; and
a fuel cell stack (300) generating electricity by using the reformed gas,
wherein the pretreatment device (100) includes an upgrading unit (120) separating a byproduct gas including carbon dioxide from the fuel gas and a carbon dioxide removing unit (130) removing carbon dioxide included in the byproduct gas, **characterized in that**
the upgrading unit (120) includes a compressor (121) absorbing and compressing the fuel gas with the impurity removed, and a multistage separation membrane (123) separating methane and carbon dioxide from the compressed fuel gas, and that
the multistage separation membrane (123) includes at least two separation membranes disposed in series.

2. The fuel cell system of claim 1, wherein
the pretreatment device (100) further includes a purification unit (110) installed in front of the upgrading unit (120),
wherein the purification unit (110) includes at least one among a dehumidification unit, a desulfurization unit, an ammonia removal unit, and a siloxane removal unit.

3. The fuel cell system of claim 1, wherein
the carbon dioxide removing unit (130) includes a configuration passing the byproduct gas through a mixture of water and calcium carbonate, and
carbon dioxide included in the byproduct gas is carbonated in the carbon dioxide removing unit (130).

4. The fuel cell system of claim 1, wherein
the reformer (200) receives heat required for the reforming reaction from a burner (210), and
further comprising an auxiliary carbon dioxide removing unit (500) connected to the burner (210) and removing carbon dioxide among a combust gas emitted from the burner.

5. The fuel cell system of claim 4, wherein
the reformed gas emitted from the reformer (200) includes carbon dioxide, and
the fuel cell stack (300) provides a non-reacted fuel including carbon dioxide to the burner (210).

6. The fuel cell system of claim 4, wherein
the auxiliary carbon dioxide removing unit (500) is connected to an air outlet of the fuel cell stack (300) and removes carbon dioxide among non-reaction air emitted from the fuel cell stack (300).

## Patentansprüche

1. Brennstoffzellensystem, welches aufweist:
eine Vorbehandlungsvorrichtung (100), die eine in einem Brenngas enthaltene Verunreinigung entfernt und die eine Reinheit von Methan erhöht,
einen Reformer (200), der das von der Vorbehandlungsvorrichtung (100) emittierte Brenngas in ein reformiertes Gas umwandelt, und
einen Brennstoffzellenstapel (300), der unter Verwendung des reformierten Gases Elektrizität erzeugt,
wobei die Vorbehandlungsvorrichtung (100) eine Aufbereitungseinheit (120), die ein Nebenproduktgas, das Kohlendioxid enthält, von dem Brenngas trennt, und eine Kohlendioxid-Entfernungseinheit (130) aufweist, die das Kohlendioxid entfernt, das in dem Nebenproduktgas enthalten ist, **dadurch gekennzeichnet, dass**
die Aufbereitungseinheit (120) einen Kompressor (121), der das Brenngas absorbiert und komprimiert, wobei die Verunreinigung entfernt worden ist, und eine mehrstufige Trennmembran (123) aufweist, die das Methan und das Kohlendioxid von dem komprimierten Brenngas trennt, und dass
die mehrstufige Trennmembran (123) mindestens zwei in Reihe angeordnete Trennmembranen enthält.

2. Brennstoffzellensystem nach Anspruch 1, wobei
die Vorbehandlungsvorrichtung (100) ferner eine Reinigungseinheit (110) aufweist, die vor der Aufbereitungseinheit (120) angebracht worden ist,
wobei die Reinigungseinheit (110) mindestens eine Einheit aus einer Entfeuchtungseinheit, einer Entschwefelungseinheit, einer Ammoniakentfernungseinheit und einer Siloxanentfernungseinheit aufweist.

3. Brennstoffzellensystem nach Anspruch 1, wobei
die Kohlendioxidentfernungseinheit (130) eine Konfiguration aufweist, die das Nebenproduktgas durch ein Gemisch aus Wasser und Calciumcarbonat leitet, und
das Kohlendioxid, das in dem Nebenproduktgas enthalten ist, in der Kohlendioxid-Entfernungseinheit (130) karbonisiert wird.

4. Brennstoffzellensystem nach Anspruch 1, wobei
der Reformer (200) die Wärme, die für die Reformierungsreaktion erforderlich ist, von einem Brenner (210) erhält, und
welches ferner eine Hilfseinheit (500) zum Entfernen von Kohlendioxid aufweist, die mit dem Brenner (210) verbunden ist und die das Kohlendioxid aus dem Verbrennungsgas, das von dem Brenner abgegeben wird, entfernt.

5. Brennstoffzellensystem nach Anspruch 4, wobei
das reformierte Gas, das von dem Reformer (200) abgegeben wird, das Kohlendioxid enthält und
der Brennstoffzellenstapel (300) einen nicht reagierten Brennstoff, der das Kohlendioxid enthält, an den Brenner (210) zuführt.

6. Brennstoffzellensystem nach Anspruch 4, wobei
die Hilfseinheit (500) zum Entfernen von Kohlendioxid mit einem Luftauslass des Brennstoffzellenstapels (300) verbunden ist und das Kohlendioxid aus der Nichtreaktionsluft, die von dem Brennstoffzellenstapel (300) abgegeben wird, entfernt.

## Revendications

1. Système de pile à combustible comprenant :
un dispositif de prétraitement (100) éliminant une impureté incluse dans un gaz combustible et augmentant la pureté du méthane ;
un reformeur (200) convertissant le gaz combustible émis à partir du dispositif de prétraitement (100) en un gaz reformé ; et
un empilement de pile à combustible (300) générant de l'électricité par l'utilisation du gaz reformé,
dans lequel le dispositif de prétraitement (100) inclut une unité de valorisation (120) séparant un sous-produit gazeux incluant du dioxyde de carbone à partir du gaz combustible et une unité d'élimination de dioxyde de carbone (130) éliminant le dioxyde de carbone inclus dans le sous-produit gazeux, **caractérisé en ce que**
l'unité de valorisation (120) inclut un compresseur (121) absorbant et comprimant le gaz combustible avec l'impureté éliminée, et une membrane de séparation à étages multiples (123) séparant le méthane et le dioxyde de carbone à partir du gaz combustible comprimé, et **en ce que**
la membrane de séparation à étages multiples (123) inclut au moins deux membranes de séparation disposées en série.

2. Système de pile à combustible selon la revendication 1, dans lequel
le dispositif de prétraitement (100) inclut en outre une unité de purification (110) installée devant l'unité de valorisation (120),
dans lequel l'unité de purification (110) inclut au moins une unité parmi une unité de déshumidification, une unité de désulfuration, une unité d'élimination d'ammoniac et une unité d'élimination de siloxane.

3. Système de pile à combustible selon la revendication 1, dans lequel
l'unité d'élimination de dioxyde de carbone (130) inclut une configuration faisant passer le sous-produit gazeux à travers un mélange d'eau et de carbonate de calcium, et
le dioxyde de carbone inclus dans le sous-produit gazeux est carbonaté dans l'unité d'élimination de dioxyde de carbone (130).

4. Système de pile à combustible selon la revendication 1, dans lequel
le reformeur (200) reçoit la chaleur nécessaire à la réaction de reformage à partir d'un brûleur (210), et
comprenant en outre une unité d'élimination de dioxyde de carbone auxiliaire (500) raccordée au brûleur (210) et éliminant le dioxyde de carbone au sein d'un gaz de combustion émis à partir du brûleur.

5. Système de pile à combustible selon la revendication 4, dans lequel
le gaz reformé émis à partir du reformeur (200) inclut du dioxyde de carbone, et
l'empilement de pile à combustible (300) fournit un combustible n'ayant pas réagi incluant du dioxyde de carbone au brûleur (210).

6. Système de pile à combustible selon la revendication 4, dans lequel
l'unité d'élimination de dioxyde de carbone auxiliaire (500) est raccordée à une sortie d'air de l'empilement de pile à combustible (300) et élimine le dioxyde de carbone au sein d'un air de non-réaction émis à partir de l'empilement de pile à combustible (300).
